# EUROPEAN PATENT SPECIFICATION

(11) **EP 2 328 214 B1**
(45) Date of publication and mention of the grant of the patent: **09.08.2017**
(21) Application number: 10189551.4
(22) Date of filing: 01.11.2010
(51) Int. Cl.: H01M 4/36, H01M 4/46, H01M 10/0525, H01M 4/40

(54) **Negative electrode for rechargeable lithium battery and rechargeable lithium battery including same**
Negative Elektrode zum Wiederaufladen von Lithiumbatterien und wiederaufladbare Lithiumbatterie damit
Électrode négative pour batterie au lithium rechargeable et batterie au lithium rechargeable dotée de celle-ci

(30) Priority: 04.11.2009 KR 20090106196
(43) Date of publication of application: 01.06.2011
(73) Proprietor: Samsung SDI Co., Ltd., Yongin-si, Gyeonggi-do 17084 (KR)
(72) Inventor: Sung, Min-Seok, Gyeonggi-do (KR); Jeong, Goo-Jin, Gyeonggi-do (KR); Lee, Sang-Min, Gyeonggi-do (KR); Sheem, Kyeu-Yoon, Gyeonggi-do (KR); Kang, Yong-Mook, Gyeonggi-do (KR); Kim, Sung-Soo, Gyeonggi-do (KR)
(74) Representative: Russell, Tim

(56) References cited:
- EP-A1- 1 033 767
- EP-A1- 1 274 140
- WO-A2-02/103822
- US-A1- 2003 215 717
- US-A1- 2005 064 291
- US-B1- 6 528 208

## Description

The present invention relates to a negative electrode for a rechargeable lithium battery and a rechargeable lithium battery including the same. The present invention also relates to a method of manufacturing the negative electrode.

Lithium rechargeable batteries have recently drawn attention as a power source of small portable electronic devices. They use an organic electrolyte solution and thereby, have twice the discharge voltage of a conventional battery using an alkaline aqueous solution. Accordingly, lithium rechargeable batteries have a high energy density. For positive active materials of a rechargeable lithium battery, lithium-transition element composite oxides capable of intercalating lithium, such as LiCoO₂, LiMn₂O₄, LiNi₁₋ₓCoₓO₂ (0<x<1), and so on, have been researched.

Conventionally, lithium metals have been used as a negative active material for rechargeable lithium batteries. However, the cycle-life of the battery may be shortened, due to the formation of dendrites, when the lithium metal is used. Therefore, carbonaceous materials, such as amorphous carbon, crystalline carbon, etc., have recently been used in place of lithium metals. The carbonaceous negative active material is resistant to the formation of dendrites, has a consistent voltage at a low potential, and exhibits good cycle-life characteristics. However, it has a high reactivity with an organic electrolyte solution, and a high diffusion rate for lithium. Therefore, the electric power characteristics, initial irreversible capacity, and electrode swelling when charged and discharged should be controlled.

In order to improve cycle-life, research has been conducted into using lithium alloys as a negative active material. U.S. Patent 6,051,340 discloses a negative electrode including a metal not alloyed with lithium and a metal alloyed with lithium. In this patent, the metal not alloyed with lithium acts as a current collector, and the metal alloyed with lithium forms an alloy with lithium ions that are released from a positive electrode, during charging. Therefore, the negative electrode includes lithium during charging. The alloy functions as a negative active material. However, the lithium alloy does not exhibit satisfactory battery characteristics.

In addition, metallic negative active materials, such as silicon (Si), tin (Sn), a compound including Si or Sn, and so on, have recently been studied as substitutes for carbonaceous materials. However, Si and Sn exhibit large irreversible capacities. Particularly, Si undergoes substantial volume changes during charging and discharging and thereby may result in a negative active material being detached, resulting in the deterioration of the cycle-life of a rechargeable lithium battery. Tin oxide, as disclosed by Japan Fuji Film. Co., Ltd., has come into the spotlight as an alternative to the carbonaceous negative active materials. However, the metal negative active material has 30% or less initial Coulomb efficiency. Further, as lithium is continuously intercalated and deintercalated to generate a lithium-metal alloy, the capacity and cycle-life thereof are decreased, resulting in a lack of commercialization.

Positive and negative electrodes of rechargeable lithium batteries are fabricated by applying a slurry composition including such active materials, binders, and optionally conductive materials, on current collectors. Aluminum for a positive current collector and copper for a negative electrode have been used. Accordingly, much research has recently been undertaken to improve the energy density of a rechargeable lithium battery.

US2005/0064291 discloses a negative electrode for a non-aqueous electrolyte secondary battery including a current collector, and an electrode material layer capable of reversibly absorbing and desorbing Li ions. The electrode material includes at least one element selected from the group consisting of Si, Sn and Al.

US2003/0215717 discloses a battery including an anode comprising an anode mixed layer including tin-containing alloy powders and a carbon material.

EP1274140 discloses a non-aqueous secondary battery including as a negative electrode a composite particle comprising a core particle composed of a solid phase A and a coating layer composed of a solid phase B covering at least a part of the core particle, where at least one of the solid phase A and the solid phase B is amorphous.

US6528208 discloses a negative electrode for a non-aqueous electrochemical cell with an intermetallic host structure containing two or more elements selected from metal elements and silicon, capable of accommodating lithium within its crystallographic host structure such that when the host structure is lithiated it transforms to a lithiated zinc-blende-type structure.

WO02/103822 discloses an electrode composition including a plurality of composite particles and a plurality of electrically conductive diluent particles admixed with the composite particles. Each of the composite particles includes an electrochemically active metal particle and an electrically conductive layer partially covering the particle.

EP1033767 discloses an electrode material for an anode of a rechargeable lithium battery containing a particulate comprising an amorphous M·A·X alloy with a substantially non-stoichiometric ratio composition.

A negative electrode for a rechargeable lithium battery, which may effectively absorb stresses produced during volume changes is described. A rechargeable lithium battery including the negative electrode may have excellent energy density and cycle-life characteristics.

According to a first aspect of the present invention, a negative electrode for a rechargeable lithium battery is provided that includes a current collector and an active material layer formed on the current collector. The active material layer includes a solid solution of a metallic component M and an active material being capable of forming a lithium-included compound. Metallic component M is selected from the group consisting of Cu, Ti, a Cu-X alloy, a Ti-X alloy, and combinations thereof. In these alloys, X is selected from the group consisting of an alkaline metal, an alkaline-earth metal, a Group 13 element, a Group 14 element, a Group 15 element, a Group 16 element, a transition element excluding Cu, a rare earth element, and combinations thereof, and is not Ti.

The active material layer may have a porosity of about 10 to about 70 volume%.

The metallic component M may be a metal solid solution represented by Chemical Formula LₓN_{y}, wherein L is Cu, Ti, or a combination thereof, N is an alkaline metal, an alkaline-earth metal, a Group 13 element, a Group 14 element, a Group 15 element, a Group 16 element, a transition element excluding Cu, a rare earth element, or a combination thereof, and not Ti. In the Chemical Formula LₓN_{y}, x ranges from 70 to 100 wt%, and y ranges from 0 to 30 wt%).

The active material may be selected from the group consisting of Si, an Si-Q1 alloy, and combinations thereof. Q1 is a transition element.

According to a second aspect of the present invention, a method of fabricating a negative electrode for a rechargeable lithium battery is provided that includes: mixing an active material and a metallic component M, to form a mixture. The metallic component M is selected from Cu, Ti, a Cu-X alloy, a Ti-X alloy, and combinations thereof. In the alloys, X is selected from an alkaline metal, an alkaline-earth metal, a Group 13 element, a Group 14 element, a Group 15 element, a Group 16 element, a transition element excluding Cu, a rare earth element, and combinations thereof, and X is not Ti. The method further includes thermal-spraying the mixture onto a current collector, to form an active material layer.

The active material and the metallic component may be mixed in powder form.

The active material powder may have an average particle size of 100 nm to 1µm, and the metallic component M powder may have an average particle size of about 100 nm to about 1µm.

The active material powder and the metallic component M powder may be mixed at a weight ratio of about 30:70 to about 70:30.

The thermal-spraying process may be performed by plasma spraying, arc spraying, high velocity oxygen fuel spraying, gas spraying, or a combination thereof. In addition, the thermal-spraying may be performed at a temperature of about 10000 to about 18000°C, at
a spraying speed of about 100 to about 1100 m/sec.

According to a third aspect of the present invention, there is provided a rechargeable lithium battery comprising the negative electrode of the invention in its first aspect, a positive electrode, and an electrolyte.

The negative electrode for a rechargeable lithium battery, according to the first aspect of the present invention, may suppress the expansion of the active material during charging and discharging and have an excellent adherence to the current collector, so it is possible to improve battery characteristics and cycle-life characteristics of the rechargeable lithium battery.

Further embodiments of the invention in any of its various aspects are as described below or as defined in the dependent claims.

A more complete appreciation of the present invention, and many of the attendant advantages thereof will become readily apparent as the same becomes better understood by reference to the following detailed description when considered in conjunction with the accompanying drawings, wherein:
Figure 1 shows a schematic view of a negative electrode according to an embodiment of the present invention;
Figure 2 is a flow chart showing a method of fabricating a negative electrode, according to an embodiment of the present invention; and
Figure 3 is a cross-sectional view of a rechargeable lithium battery, according to an embodiment of the present invention.

In a rechargeable lithium battery, active materials included in an electrode may expand and contract when the rechargeable lithium battery is charged and discharged. In particular, a silicon-based negative active material undergoes severe volume changes. The volume changes of the active materials may deteriorate cycle-life characteristic of the rechargeable lithium battery.

In the second aspect of the present invention, a mixture of an active material and a metallic powder is thermally sprayed to form an active material layer. Therefore, the active material layer can withstand stresses resulting from changes in the volume of the active material, during charging and discharging. Therefore, the battery characteristics and cycle-life of the rechargeable lithium battery may be improved.

The thermal spraying may form a solid solution of the metallic component and the active material.

A negative electrode, according to the first aspect of the present invention, includes a current collector and an active material layer formed on the current collector. The active material layer may include a solid solution of a metallic component M and an active material that is capable of forming a lithium-included compound. Metallic component M is selected from Cu, Ti, a Cu-X alloy, a Ti-X alloy, and a combination thereof. In these alloys, X is selected from an alkaline metal, an alkaline-earth metal, a Group 13 element, a Group 14 element, a Group 15 element, a Group 16 element, a transition element excluding Cu, a rare earth element, and a combination thereof, and is not Ti.

The active material layer may not include an additional conductive agent or binder. The metallic component M may be represented by LₓN_{y}, wherein, L is Cu, Ti, or a combination thereof; N is selected from an alkaline metal, an alkaline-earth metal, a Group 13 element, a Group 14 element, a Group 15 element, a Group 16 element, a transition element excluding Cu, a rare earth element, or a combination thereof, and is not Ti, x ranges from about 70 to 100 wt%, and y ranges from about 0 to 30 wt%. The metallic component M may be in the form of a solid solution.

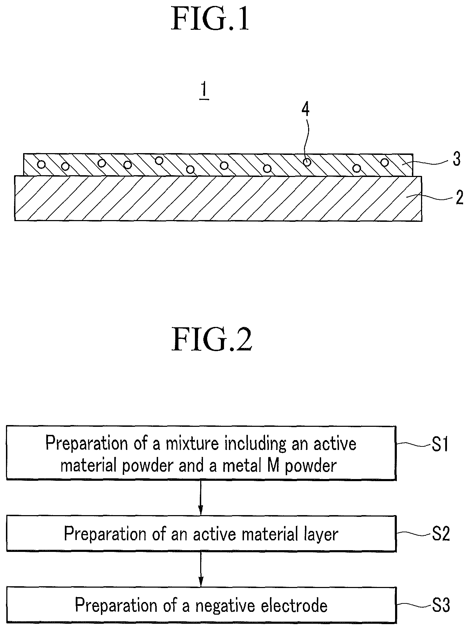

Figure 1 is a cross-sectional view of a negative electrode 1 for a rechargeable lithium battery, according to an embodiment, but the present invention is not limited thereto. Referring to FIG. 1, the electrode 1 includes a current collector 2 and an active material layer 3 disposed on the current collector 2. The active material layer 3 may be porous, and that is, the active material layer 3 may have pores 4.

The current collector 2 may include a copper foil, a nickel foil, a stainless steel foil, a titanium foil, a nickel foam, a copper foam, or a polymer material coated with a conductive metal. In particular, the current collector 2 may be formed of a copper foil or a nickel foil. The polymer may be selected from polyethylene terephthalate, polyimide, polytetrafluoroethylene, polyethylene naphthalate, polypropylene, polyethylene, polyester, polyvinylidene fluoride, polysulfone, copolymers thereof, or a combination thereof.

Then, the active material layer 3 is disposed on the current collector 2. The active material layer 3 may include a solid solution of the metallic component M and the active material.

The negative electrode for a rechargeable lithium battery, can be formed by thermal-spraying a mixture of the active material and the metallic component M, which are in powder form, onto a current collector. While the mixture passes through the inside of a high-temperature heating source, the metallic component M is completely fused, and the surface of active material powder is fused, prior to impacting the current collector. In particular, only the surface of the active material powder is fused. However, the metallic component M is completely fused. The active material particles having fused surfaces contact the completely-fused metallic component M. This results in the active material particles being driven inside the fused metallic component M and disposed on the current collector. It is then possible to suppress the expansion of the active material, since the active material particles are strongly connected by the fused metallic component M. The metallic component M may operate as a binder and a conductive material, so it is possible to conveniently provide a negative electrode, without adding an additional conductive agent and/or binder, as in a conventional active material layer.

Generally, an active material particle, such as Si, and a metal form a brittle inter-metallic compound having a low mechanical strength. However, the thermal spraying process results in high speed fusing and cooling, so it is possible to suppress the formation of such an inter-metallic compound.

In addition, the obtained active material layer may be porous, due to the fusion of the active material powder and the metallic component M powder. The obtained active material layer may have a porosity of about 10 to 70 volume%, or for example, a porosity of about 20 to 50 volume%. Such a porosity allows the active material layer to absorb the stresses resulting from volume changes, while maintaining a suitable mechanical strength, and also facilitates the permeation of an electrolyte solution.

In addition, since the active material layer is in the form of an alloy, the mechanical strength thereof is significantly better than that of a conventional active material including organic materials, such as a conductive agent and a binder. Since the active material layer is adhered to the current collector by the fusion of the powders, the active material layer is highly resistant to delamination from the current collector.

Furthermore, the active material is capable of forming a lithium-included compound. The active material may be selected from Si, an Si-Q1 alloy, and combinations thereof. In these alloys, Q₁ is a transition element.

In particular, Q1 may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Ru, Os, Hs, Rh, Ir, Pd, Pt, Cu, Ag, Au, Zn, Cd, B, Al, Ga, In, Ti, Ge, P, As, Sb, Bi, S, Se, Te, Po, and combinations thereof. In an embodiment, the active material includes Si.

The active material may be included at 50 wt% or more, or 60 to 70 wt%, based on the total weight of active material layer. When the active material is included at 50 wt% or more, it is possible to show a suitable battery capacity.

The metallic component M may be selected from Cu, Ti, Cu-X alloy, a Ti-X alloy, and a combination thereof. In these alloys, X may be an alkaline metal, an alkaline-earth metal, a Group 13 element excluding Ti, a Group 14 element, a transition element excluding Cu, a rare earth element, or a combination thereof. In particular, X may be Mg, Ca, Sr, Ba, Ra, Sc, Y, Ti, Zr, Hf, Rf, V, Nb, Ta, Db, Cr, Mo, W, Sg, Tc, Re, Bh, Fe, Ru, Os, Hs, Rh, Ir, Pd, Pt, Ag, Au, Zn, Cd, B, Al, Ga, In, Si, Ge, Sn, P, As, Sb, Bi, S, Se, Te, Po, or a combination thereof. In an embodiment, X is Mg, Al, or a combination thereof. The metallic component M may be represented by Chemical Formula LₓN_{y}, wherein L is Cu, Ti, or a combination thereof; N is an alkaline metal, an alkaline-earth metal, a Group 13 element excluding Ti, a Group 14 element, a transition element excluding Cu, a rare earth element, or a combination thereof. In addition, x ranges from about 70 to 100 wt%; and y ranges from about 0 to 30 wt%.

The negative electrode for a rechargeable lithium battery, according to an embodiment, may be fabricated by mixing the active material powder and the metallic component M powder, to produce a mixture. The mixture is then thermal-sprayed onto a current collector, to produce an active material layer.

Figure 2 is a flow chart showing a method of fabricating a negative electrode, according to an embodiment. Referring to Figures 1 and 2, the active material powder and the metallic component M powder are mixed, to produce a mixture (S1).

The active material powder may have an average particle size of about 100 nm to 1µm or, for example, an average particle size of about 200 nm to 500 nm. When the active material powder has such an average particle size, the structure and initial efficiency of active material is maintained, resulting in good the cycle-life characteristics.

The metallic component M powder may have an average particle size of about 100 nm to 1µm or, for example, an average particle size of 200 nm to 500 nm. When the metallic component M powder has such an average particle size, it is easier to conjugate the mixture, so a reduction of reversible efficiency, caused by covering the surface of active material, does not substantially occur.

The active material powder and metallic component M powder may be mixed at a weight ratio of about 30:70 to about 70:30 or, for example, a weight ratio of about 40:60 to about 60:40. When the active material powder and the metallic component M powder are mixed within such a range, suitable conductivity, capacity retention, and heating efficiency are produced.

Then the obtained mixture is thermally sprayed onto a current collector, to form an active material layer (S2). The current collector may be as recited above.

The thermal spraying process does not significantly affect the characteristics of the mixture materials or of the current collector 2. The thermal spraying process may be, for example, plasma spraying, Arc spraying, high velocity oxygen fuel spraying (HVOF), gas spraying, combinations thereof, and like processes. The thermal spraying process may be easily performed under an air atmosphere, and it is possible to easily control the characteristics of active material layer, by adjusting the spraying speed, temperature, or the like.

According to one exemplary embodiment, the negative electrode is thermal sprayed at a temperature ranging from about 10000 to 18000°C or, for example, a temperature ranging from about 12000 to about 15000 °C. When the thermal spraying process is performed within such a temperature range, the surface of active material is fused, and metal M powder is completely fused so that a solid solution of metallic component M is easily produced and the resulting active material is inserted into the solid solution of metallic component M. Furthermore, it is possible to provide an active material layer having a suitable porosity.

During the thermal spraying process, the powder mixture may be sprayed at about 100 to 1100 m/sec or, for example, about 200 to 1100m/sec, or about 200 to 300 m/sec. When the powder mixture is sprayed within such a range, it is possible to suitably form a solid solution of the metallic component M so that a solid solution of metallic component M is easily produced. The resulting active material layer 3 also has a suitable porosity. In addition, the surface of active material is sufficiently fused to the metallic component M.

As a result, the negative electrode 1 is produced (S3). The active material layer 3 of the negative electrode 1 is porous and the active material particles are driven inside the solid solution of metallic component M on the current collector 2.

Since the metallic component M has excellent electric conductivity and uniformly surrounds the active material, the active material layer 3 has excellent conductivity and adherence to the current collector 2. In addition, an additional conductive material and binder are not required. Since the active material is strongly connected to the metallic component M, it is possible to suppress the expansion of the active material layer 3, during charging and discharging. As a result, the negative electrode 1 exhibits a high-capacity and excellent cycle-life characteristics.

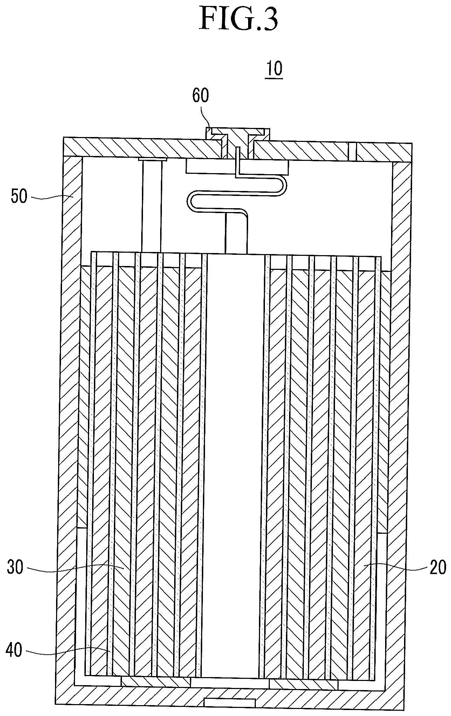

Figure 3 is a cross-sectional view of a rechargeable lithium battery 10, according to an embodiment of the present invention. The rechargeable lithium battery 10 includes a positive electrode 20, a negative electrode 30, a separator 40 interposed between the positive electrode 20 and negative electrode 30, an electrolyte impregnating the separator 40, a battery case 50, and a sealing member 60 to seal the battery case 50.

The negative electrode 30 is similar to the negative electrode 1. The positive electrode 20 includes a current collector and a positive active material layer disposed on the current collector. The positive active material layer includes a positive active material capable of performing electrochemical redox reaction.

The positive active material includes lithiated compounds that reversibly intercalate and deintercalate lithium ions. The positive active material may include a composite oxide including lithium and at least one selected from the group consisting of cobalt, manganese, and nickel. In particular, the following lithium compounds may be used.

LiₐA_{1-b}X_{b}D₂ (wherein, 0.95 ≤ a ≤ 1.1 and 0 ≤ b ≤ 0.5); LiₐA_{1-b}X_{b}O_{2-c}D_{c} (wherein, 0.95 ≤ a ≤ 1.1, 0 ≤ b ≤ 0.5 and 0 ≤ c ≤ 0.05); LiₐE_{1-b}X_{b}O_{2-c}D_{c} (wherein, 0.95 ≤ a ≤ 1.1, 0 ≤ b ≤ 0.5, 0 ≤ c ≤ 0.05); LiₐE_{2-b}X_{b}O_{4-c}D_{c} (wherein, 0.95 ≤ a ≤ 1.1, 0 ≤ b ≤ 0.5, 0 ≤ c ≤ 0.05); LiₐNi_{1-b-c}Co_{b}X_{c}D_{α} (wherein, 0.95 ≤ a ≤ 1.1, 0 ≤ b ≤ 0.5, 0 ≤ c ≤ 0.05, 0 < α ≤ 2); LiₐNi_{1-b-c}Co_{b}X_{c}O_{2-α}T_{α} (wherein, 0.95 ≤ a ≤ 1.1, 0 ≤ b ≤ 0.5, 0 ≤ c ≤ 0.05, 0 < α < 2); LiₐNi_{1-b-c}Co_{b}X_{c}O_{2-α}T₂ (wherein, 0.95 ≤ a ≤ 1.1, 0 ≤ b ≤ 0.5, 0 ≤ c ≤ 0.05, 0 < α < 2); LiₐNi_{1-b-c}Mn_{b}X_{c}D_{α} (wherein, 0.95 ≤ a ≤ 1.1, 0 ≤ b ≤ 0.5, 0 ≤ c ≤ 0.05, 0 < α ≤ 2); LiₐNi_{1-b-c}Mn_{b}X_{c}O_{2-α}T_{α} (wherein, 0.95 ≤ a ≤ 1.1, 0 ≤ b ≤ 0.5, 0 ≤ c ≤ 0.05, 0 < α < 2); LiₐNi_{1-b-c}Mn_{b}X_{c}O_{2-α}T₂ (wherein, 0.95 ≤ a ≤ 1.1, 0 ≤ b ≤ 0.5, 0 ≤ c ≤ 0.05, 0 < α < 2); LiₐNi_{b}E_{c}G_{d}O₂ (wherein, 0.90 ≤ a ≤ 1.1,0 ≤ b ≤ 0.9, 0 ≤ c ≤ 0.9, 0.001 ≤ d ≤ 0.2); LiₐNi_{b}Co_{c}Mn_{d}GₑO₂ (wherein, 0.90 ≤ a ≤ 1.1, 0 ≤ b ≤ 0.9, 0 ≤ c ≤ 0.5, 0 ≤ d ≤ 0.5, 0.001 ≤ e ≤ 0.2); LiₐNiG_{b}O₂ (wherein, 0.90 ≤ a ≤ 1.1, 0.001 ≤ b ≤ 0.1); LiₐCoG_{b}O₂ (wherein, 0.90 ≤ a ≤ 1.1, 0.001 ≤ b ≤ 0.1); LiₐMnG_{b}O₂ (wherein, 0.90 ≤ a ≤ 1.1, 0.001 ≤ b ≤ 0.1); LiₐMn₂G_{b}O₄ (wherein, 0.90 ≤ a ≤ 1.1, 0.001 ≤ b ≤ 0.2); QO₂; QS₂; LiQS₂; V₂O₅; LiV₂O₅; LiZO₂; LiNiVO₄; Li_{(3-f)}J₂(PO₄)₃ (0 ≤ f ≤ 3); Li_{(3-f)}Fe₂(PO₄)₃ (0 ≤ f ≤ 2); and LiFePO₄.

In the above Chemical Formulae, A is selected from Ni, Co, Mn, and combinations thereof; X is selected from Al, Ni, Co, Mn, Cr, Fe, Mg, Sr, V, a rare earth element, and combinations thereof; D is selected from O, F, S, P, and combinations thereof; E is selected from Co, Mn, and combinations thereof; T is selected from F, S, P, and combinations thereof; G is selected from Mg, Ca, Sr, Ba, Ra, Sc, Y, Ti, Zr, Hf, Rf, V, Nb, Ta, Db, Cr, Mo, W, Sg, Tc, Re, Bh, Fe, Ru, Os, Hs, Rh, Ir, Pd, Pt, Cu, Ag, Au, Zn, Cd, B, Al, Ga, In, Tl, Si, Ge, Sn, P, As, Sb, Bi, S, Se, Te, Po, and combinations thereof; Q is selected from Ti, Mo, Mn, and combinations thereof; Z is selected from Cr, V, Fe, Sc, Y, Ti, and combinations thereof; and J is selected from V, Cr, Mn, Co, Ni, Cu, and combinations thereof.

The lithium compound may be coated with a coating layer, or the lithium compound may be mixed with another compound having a coating layer thereon. The coating layer may include at least one compound selected from the group consisting of an oxide and a hydroxide of a coating element. The compound that forms the coating layer may be amorphous or crystalline. The coating layer may include at least one element selected from Mg, Al, Co, K, Na, Ca, Si, Ti, V, Sn, Ge, Ga, B, As, Zr, and mixtures thereof. The element may be in the form of an oxide, a hydride, an oxyhydroxide, an oxycarbonate, a hydroxycarbonate, or a combination thereof. The coating layer can be formed by any suitable method, such as spray coating, impregnation, or the like.

The positive active material layer includes a binder for improved adherence to the current collector, and/or a conductive material for improved electric conductivity. The binder includes one or more selected from the group consisting of polyvinylchloride, polyvinyldifluoride, an ethylene oxide-containing polymer, polyvinylalcohol, carboxylated polyvinylchloride, polyvinylidenefluoride, polyimide, polyurethane, an epoxy resin, nylon, carboxylmethylcellulose, hydroxypropylenecellulose, diacetylenecellulose, polyvinylpyrrolidone, polytetrafluoroethylene, a styrene-butadiene rubber, and an acrylated styrene-butadiene rubber.

Any suitable electrically conductive material can be used. Examples of the conductive material include natural graphite, artificial graphite, carbon black, acetylene black, ketjen black, a carbon fiber, a metal powder or a metal fiber including copper, nickel, aluminum, silver, or a polyphenylene derivative.

The positive electrode 20 may be fabricated by any suitable method, for example, by mixing the positive active material, the conductive material, and the binder, coating the resultant composition on a current collector, followed by compression. The solvent may be N-methylpyrrolidone, but it is not limited thereto.

The current collector may be one selected from the group consisting of an aluminum foil, a nickel foil, a stainless steel foil, a titanium foil, a nickel foam, a polymer substrate coated with a conductive metal, and combinations thereof. In particular, aluminum foil is appropriate in some embodiments.

The electrolyte of the rechargeable lithium battery 10 includes a lithium salt dissolved in a non-aqueous organic solvent. The lithium salts act as a lithium-ion source, facilitating basic battery operations. Examples of the lithium salt include LiSbF₆, LiAsF₆, LiClO₄, LiCF₃SO₃, LiC₄F₉SO₃, LiAlO₄, LiAlCl₄, LiSO₃CF₃, LiCl, LiI, LiB(C₂O₄)₂, Li[N(SO₂CF₃)₂], Li[N Li[N(SO₂CF₂CF₃)₂], or a mixture thereof.

The lithium salt may be used at a 0.6 to 2.0Mconcentration. The lithium salt may be used at a 0.7 to 1.6 M concentration. When the lithium salt concentration is within such a range, excellent electrolyte solution performance and lithium ion mobility may be obtained, due to a desirable viscosity.

The non-aqueous organic solvent acts as a medium for transmitting ions in the electrochemical reaction of the battery 10. The non-aqueous organic solvent may include a carbonate-based, ester-based, ether-based, ketone-based, alcohol-based, protic, or aprotic solvent. Examples of the carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and so on. Examples of the ester-based solvent may include n-methyl acetate, n-ethyl acetate, n-propyl acetate, dimethylacetate, methylpropionate, ethylpropionate, γ-butyrolactone, decanolide, valerolactone, mevalonolactone, caprolactone, and so on. Examples of the ether-based solvent include dibutyl ether, tetraglyme, diglyme, dimethoxyethane, 2-methyltetrahydrofuran, tetrahydrofuran, and so on, and examples of the ketone-based solvent include cyclohexanone and so on. Examples of the alcohol-based solvent include ethanol, isopropyl alcohol, and the like, and examples of the protic solvent include diglyme (DGM), tetraglyme (TGM), and the like. Examples of the aprotic solvent include nitriles such as X-CN (wherein X is a C2 to C20 linear, branched, or cyclic hydrocarbon, a double bond, an aromatic ring, or an ether bond); amides such as dimethyl formamide, dimethyl acetamide, and the like; dioxolanes, such as 1,3-dioxolane(DOX); sulfolanes; and cyclohexanes.

The non-aqueous organic solvent may be used singularly or as a mixture. When the organic solvent is used as a mixture, the mixture ratio can be controlled, in accordance with a desirable battery performance.

The carbonate-based solvent may include a mixture of a cyclic carbonate and a linear carbonate. The cyclic carbonate and the linear carbonate are mixed together at a volume ratio of about 1:1 to 1:9. When such a mixture is used as the electrolyte, electrolyte performance may be enhanced.

In addition, the non-aqueous organic solvent may include mixtures of carbonate-based solvents and aromatic hydrocarbon-based solvents. The carbonate-based solvents and the aromatic hydrocarbon-based solvents are mixed together at a volume ratio of about 1:1 to 30:1.

The aromatic hydrocarbon-based organic solvent may be represented by the following Chemical Formula 1.

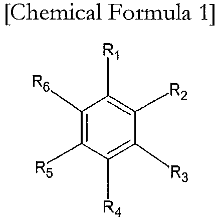

In Chemical Formula 1, R₁ to R₆ are independently selected from hydrogen, a halogen, a C1 to C10 alkyl, a haloalkyl, or combinations thereof.

The aromatic hydrocarbon-based organic solvent may include, but is not limited to, at least one selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 1,2-difluorotoluene, 1,3-difluorotoluene, 1,4-difluorotoluene, 1,2,3-trifluorotoluene, 1,2,4-trifluorotoluene, chlorotoluene, 1,2-dichlorotoluene, 1,3-dichlorotoluene, 1,4-dichlorotoluene, 1,2,3-trichlorotoluene, 1,2,4-trichlorotoluene, iodotoluene, 1,2-diiodotoluene, 1,3-diiodotoluene, 1,4-diiodotoluene, 1,2,3-triiodotoluene, 1,2,4-triiodotoluene, xylene, or combinations thereof.

The electrolyte may include an additive to improve battery characteristics. For example, an ethylene carbonate-based compound represented by the following Chemical Formula 2 may be used in order to improve thermal safety.

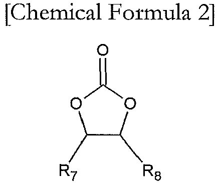

In Chemical Formula 2, R₇ and R₈ are independently hydrogen, a halogen, a cyano (CN), a nitro (NO₂), and fluorinated C1 to C5 alkyl, provided that at least one of R₇ and R₈ is a halogen, a cyano (CN), a nitro (NO₂), and fluorinated C1 to C5 alkyl (i.e. R₇ and R₈ are not both hydrogen).

Examples of the ethylene carbonate-based compound represented Chemical Formula 2 include one selected from ethylene carbonate, fluoroethylenecarbonate, difluoroethylenecarbonate, chloroethylenecarbonate, dichloroethylenecarbonate, bromoethylenecarbonate, dibromoethylenecarbonate, nitroethylenecarbonate, cyanoethylenecarbonate, or a mixture thereof. In an embodiment, fluoroethylenecarbonate is appropriate. An amount of the ethylene carbonate-based compound is not limited, and it may be added in an amount to improve thermal safety.

The separator 40 may be one or more layers of a compound selected from polyethylene, polypropylene, and polyvinylidene fluoride, or it may be a combined multi-layer such as a polyethylene/polypropylene two-layered separator, a polyethylene/polypropylene/polyethylene three-layered separator, or a polypropylene/polyethylene/polypropylene three-layered separator.

Hereinafter, one or more embodiments of the present invention will be described in more detail with reference to the following examples. However, these examples are not intended to limit the scope of the one or more embodiments of the present invention.

### Example 1: Fabrication of negative electrode

Si powder having an average particle diameter of 200 nm and Cu powder having an average particle diameter of 1µm, were mixed at a weight ratio of 40:60, to provide a mixture. The obtained mixture was thermal-sprayed through a heating source of 15000°C, at a speed of Mach 3, toward a Cu current collector, to form an active material layer of a negative electrode for a rechargeable lithium battery. The obtained active material layer had a thickness of 20 µm.

### Example 2: Fabrication of negative electrode

A negative electrode for a rechargeable lithium battery was fabricated in accordance with the same procedure as in Example 1, except that Si powder having an average particle diameter of 1 µm and Ti powder having an average particle diameter of 1 µm were mixed at a weight ratio of 50:50, to provide the mixture.

### Example 3: Fabrication of negative electrode

A negative electrode for a rechargeable lithium battery was fabricated in accordance with the same procedure as in Example 1, except that Si powder having an average particle diameter of 200 nm and Cu-Al alloy powder having an average particle diameter of 1 µm were mixed at a weight ratio of 50:50, to provide the mixture.

### Example 4: Fabrication of negative electrode

A negative electrode for a rechargeable lithium battery was fabricated in accordance with the same procedure as in Example 1, except that SiNi alloy powder having an average particle diameter of 200 nm and Ti powder having an average particle diameter of 1 µm were mixed at a weight ratio of 50:50, to provide the mixture.

### Comparative Example 1: Fabrication of negative electrode

A negative active material of Si powder having an average particle diameter of 200 nm, a binder of polyvinylidene fluoride (PVDF), and a conductive material of carbon (Super-P) were mixed at a weight ratio of 94/3/3 and dispersed in N-methyl-2-pyrrolidone, to provide a negative electrode slurry. The slurry was coated on copper foil to a thickness of 10 µm, dried, and pressed, to provide a negative electrode.

### Comparative Example 2: Fabrication of negative electrode

1400°C completely melted solution of 90% of silicon and 10% of nickel was poured into in a copper mold and quenched, to provide an ingot of silicon nickel alloy. The ingot was pulverized to obtain silicon nickel alloy particles having an average particle diameter of 0.1-10 µm. The silicon nickel alloy particles were mixed with nickel particles having an average particle diameter of 30 µm, at a weight ratio of 80:20, and pulverized using an attritor, to provide a uniform particle mixture.

The particle mixture, a conductive material of acetylene black (average particle diameter: 0.1 µm), and a binder of polyvinylidene fluoride were mixed at a weight ratio of 80/10/10 and dispersed in N-methyl-2-pyrrolidone, to provide a negative electrode slurry.

The obtained slurry was coated on a copper foil of a thickness of 35 µm and dried, to provide an active material layer having a thickness of 60 µm. The dried active material layer was then pre-pressed.

The resultant was dipped in a plating bath (nickel: 50 g/l, sulfuric acid: 60 g/l, temperature: 40°C) to electroplate the active material layer. The resultant was roll-pressed to provide a negative electrode.

### [Fabrication of test cell for testing charge and discharge]

Each negative electrode obtained from Examples 1-4 and Comparative Examples 1-2, a counter electrode of metal lithium foil, and a porous polypropylene film separator were used to form coin-type half-cells. The half-cells included an electrolyte solution, in which LiPF₆ was dissolved in a mixed solvent (PC:DEC:EC = 1:1:1) of propylene carbonate (PC), diethyl carbonate (DEC), and ethylene carbonate, to provide a concentration of 1.3 mol/L.

### Expansion rate of negative electrode

The obtained half-cells were charged once at 0.2 C, and the thickness of each negative electrode was measured. The expansion rate of the negative electrode was indicated as a ratio of the thickness of the negative electrode after the charging to the thickness of the negative electrode before the charging and discharging, in the following Table 1.

### Initial charge and discharge capacity

The obtained coin-type half-cells were charged and discharged once at 0.2C, at a 0.005V cut-off charge and a 1.0V cut-off discharge. The charge and discharge capacities were measured. The results are shown in the following Table 1.

### Cycle-life

The obtained coin-type half-cells were charged and discharged at 0.2C, for 50 cycles, and the capacity after the charge and discharge was measured and compared to the initial capacity to indicate Cycle-life %, as shown in Table 1.

**(Table 1)**

| | Negative electrode expansion ratio (%) | Initial charge capacity [mAh/g] | Initial discharge capacity [mAh/g] | Initial efficiency [%] | Cycle-life [%] |
|---|---|---|---|---|---|
| Example 1 | 30 | 1600 | 1360 | 85 | 92 |
| Example 2 | 42 | 1200 | 996 | 83 | 93 |
| Example 3 | 25 | 1800 | 1656 | 92 | 96 |
| Example 4 | 15 | 1600 | 1296 | 81 | 89 |
| Comparative Example 1 | 180 | 2020 | 1656 | 82 | 25 |
| Comparative Example 2 | 156 | 1420 | 1065 | 75 | 10 |

As shown in Table 1, it is understood that the cycle-life characteristics significantly depended on the porosity and density in the active material layer. That is, it is confirmed that the cells including porous electrodes (Examples 1 to 4) had remarkably improved cycle-life characteristics, as compared to the non-porous Comparative Example 1.

In addition, in Comparative Example 2, although the peeling resistance was good, the expansion of the active material during charging and discharging was excessively large, so the capacity and the cycle-life characteristic were less than those of Example 1 to 4.

Whilst the present invention has been described in connection with certain exemplary embodiments thereof, it is to be understood that the invention is not limited to the disclosed embodiments, but, on the contrary, is intended to cover various modifications and equivalent arrangements included within the scope of the appended claims.

## Claims

1. A negative electrode for a rechargeable lithium battery comprising:
a current collector; and
an active material layer disposed on the current collector, comprising:
an active material that is capable of forming a lithium-included compound selected from Si, an Si-Q1 alloy, and combinations thereof,
wherein Q1 is a transition element;
and
a solid solution of a metallic component selected from the group consisting of Cu, Ti, a Cu-X alloy, a Ti-X alloy, and a combination thereof, wherein X is selected from the group consisting of an alkaline metal, an alkaline-earth metal, a Group 13 element, a Group 14 element, a Group 15 element, a Group 16 element, a transition element excluding Cu, a rare earth element, and a combination thereof, and X is not Ti;
wherein the active material layer comprises a solid solution of the metallic component and the active material

2. The negative electrode of claim 1, wherein the active material layer has a porosity ranging from about 10 volume% to about 70 volume%.

3. The negative electrode of claim 1 or claim 2, wherein X is selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Ru, Os, Hs, Rh, Ir, Pd, Pt, Ag, Au, Zn, Cd, B, Al, Ga, In, Si, Ge, Sn, P, As, Sb, Bi, S, Se, Te, Po, and a combination thereof.

4. The negative electrode of any of claims 1 to 3, wherein the active material is Si.

5. The negative electrode of any of claims 1 to 4, wherein the active material layer comprises at least 50 wt% of the active material, based on the total weight of active material layer.

6. The negative electrode of any of claims 1 to 5, wherein the active material layer comprises from about 60 wt% to about 70% wt% of the active material, based on the total weight of active material layer.

7. The negative electrode of any of claims 1 to 6, wherein the active material layer comprises a solid solution of the metallic component and the active material.

8. A method of manufacturing a negative electrode of any of claims 1 to 7 for a rechargeable lithium battery comprising:
mixing an active material that is capable of forming a lithium-included compound and a metallic component selected from the group consisting of Cu, Ti, a Cu-X alloy, a Ti-X alloy, and a combination thereof, to prepare a mixture,
wherein X is selected from the group consisting of an alkaline metal, an alkaline-earth metal, a Group 13 element, a Group 14 element, a Group 15 element, a Group 16 element, a transition element excluding Cu, a rare earth element, and a combination thereof; and X is not Ti, and
thermal-spraying the mixture into a current collector, to produce an active material layer.

9. The method of claim 8, wherein the active material has an average particle size ranging from about 100 nm to about 1µmand/ or the metallic component has an average particle size of from about 100 nm to about 1µm.

10. The method of any of claims 8 to 9, wherein the active material and the metallic component are mixed at a weight ratio of from about 30:70 to about 70:30.

11. The method of any of claims 8 to 10, wherein the thermal-spraying is performed at a temperature ranging from about 10000°C to about 18000°C and/or wherein the thermal-spraying is performed at about 100 m/sec to about 1100 m/sec.

12. The method of any of claims 8 to 11, wherein the active material and the metallic component are mixed in powder form.

13. A rechargeable lithium battery comprising:
the negative electrode of any of claims 1 to 7;
a positive electrode; and
an electrolyte.

## Patentansprüche

1. Negative Elektrode zum Wiederaufladen von Lithiumbatterien, umfassend:
einen Stromkollektor; und
eine auf dem Stromkollektor angeordnete Aktivmaterialschicht, umfassend:
ein Aktivmaterial, das eine Lithium enthaltende Verbindung bilden kann, ausgewählt aus Si, einer Si-Q1-Legierung, und Kombinationen davon,
wobei Q1 ein Übergangsmetall ist;
und
eine feste Lösung einer metallischen Komponente, ausgewählt aus der Gruppe bestehend aus Cu, Ti, einer Cu-X-Legierung, einer Ti-X-Legierung, und einer Kombination davon, wobei X ausgewählt ist aus der Gruppe bestehend aus einem Alkalimetall, einem Erdalkalimetall, einem Element der Gruppe 13, einem Element der Gruppe 14, einem Element der Gruppe 15, einem Element der Gruppe 16, einem Übergangsmetall außer Cu, einem Seltenerdmetall, und einer Kombination davon, und X nicht Ti ist;
wobei die Aktivmaterialschicht eine feste Lösung der metallischen Komponente und des Aktivmaterials umfasst.

2. Negative Elektrode nach Anspruch 1, wobei die Aktivmaterialschicht eine von etwa 10 Vol.-% bis etwa 70 Vol.-% reichende Porosität aufweist.

3. Negative Elektrode nach Anspruch 1 oder Anspruch 2, wobei X ausgewählt ist aus der Gruppe bestehend aus Mg, Ca, Sr, Ba, Ra, Sc, Y, Ti, Zr, Hf, Rf, V, Nb, Ta, Db, Cr, Mo, W, Sg, Tc, Re, Bh, Fe, Ru, Os, Hs, Rh, Ir, Pd, Pt, Ag, Au, Zn, Cd, B, Al, Ga, In, Si, Ge, Sn, P, As, Sb, Bi, S, Se, Te, Po, und einer Kombination davon.

4. Negative Elektrode nach einem der Ansprüche 1 bis 3, wobei das Aktivmaterial Si ist.

5. Negative Elektrode nach einem der Ansprüche 1 bis 4, wobei die Aktivmaterialschicht mindestens 50 Gew.-% des Aktivmaterials, bezogen auf das Gesamtgewicht der Aktivmaterialschicht, umfasst.

6. Negative Elektrode nach einem der Ansprüche 1 bis 5, wobei die Aktivmaterialschicht von etwa 60 Gew.-% bis etwa 70 Gew.-% des Aktivmaterials, bezogen auf das Gesamtgewicht der Aktivmaterialschicht, umfasst.

7. Negative Elektrode nach einem der Ansprüche 1 bis 6, wobei die Aktivmaterialschicht eine feste Lösung der metallischen Komponente und des Aktivmaterials umfasst.

8. Verfahren zur Herstellung einer negativen Elektrode nach einem der Ansprüche 1 bis 7 für eine wiederaufladbare Lithiumbatterie, umfassend:
Mischen eines Aktivmaterials, das eine Lithium enthaltende Verbindung bilden kann, und einer metallischen Komponente, ausgewählt aus der Gruppe bestehend aus Cu, Ti, einer Cu-X-Legierung, einer Ti-X-Legierung, und einer Kombination davon, um ein Gemisch herzustellen,
wobei X ausgewählt ist aus der Gruppe bestehend aus einem Alkalimetall, einem Erdalkalimetall, einem Element der Gruppe 13, einem Element der Gruppe 14, einem Element der Gruppe 15, einem Element der Gruppe 16, einem Übergangsmetall außer Cu, einem Seltenerdmetall, und einer Kombination davon; und X nicht Ti ist, und
thermisches Spritzen des Gemisches auf einen Stromkollektor, um eine Aktivmaterialschicht zu erzeugen.

9. Verfahren nach Anspruch 8, wobei das Aktivmaterial eine von etwa 100 nm bis etwa 1 µm reichende mittlere Teilchengröße aufweist und/oder die metallische Komponente eine von etwa 100 nm bis etwa 1 µm reichende mittlere Teilchengröße aufweist.

10. Verfahren nach einem der Ansprüche 8 bis 9, wobei das Aktivmaterial und die metallische Komponente in einem Gewichtsverhältnis von etwa 30:70 bis etwa 70:30 gemischt werden.

11. Verfahren nach einem der Ansprüche 8 bis 10, wobei das thermische Spritzen bei einer von etwa 10000 °C bis etwa 18000 °C reichenden Temperatur durchgeführt wird und/oder wobei das thermische Spritzen mit etwa 100 m/s bis etwa 1100 m/s durchgeführt wird.

12. Verfahren nach einem der Ansprüche 8 bis 11, wobei das Aktivmaterial und die metallische Komponente in Pulverform gemischt werden.

13. Wiederaufladbare Batterie, umfassend:
die negative Elektrode nach einem der Ansprüche 1 bis 7;
eine positive Elektrode; und
einen Elektrolyten.

## Revendications

1. Electrode négative pour une batterie au lithium rechargeable comprenant :
un collecteur de courant ; et
une couche de matériau actif disposée sur le collecteur de courant, comprenant :
un matériau actif qui est capable de former un composé inclus dans le lithium sélectionné parmi Si, un alliage Si-Q1, et des combinaisons de ceux-ci,
Q1 étant un élément de transition ; et
une solution solide d'un composant métallique sélectionné dans le groupe consistant en Cu, Ti, un alliage Cu-X, un alliage Ti-X, et une combinaison de ceux-ci, X étant sélectionné dans le groupe consistant en un métal alcalin, un métal alcalino-terreux, un élément du Groupe 13, un élément du Groupe 14, un élément du Groupe 15, un élément du Groupe 16, un élément de transition à l'exclusion du Cu, un élément de terre rare, et une combinaison de ceux-ci, et X n'étant pas Ti ;
dans laquelle la couche de matériau actif comprend une solution solide du composant métallique et du matériau actif.

2. Electrode négative selon la revendication 1, dans laquelle la couche de matériau actif a une porosité allant d'environ 10 % en volume à environ 70 % en volume.

3. Electrode négative selon la revendication 1 ou la revendication 2, dans laquelle X est sélectionné dans le groupe consistant en Mg, Ca, Sr, Ba, Ra, Sc, Y, Ti, Zr, Hf, Rf, V, Nb, Ta, Db, Cr, Mo, W, Sg, Tc, Re, Bh, Fe, Ru, Os, Hs, Rh, Ir, Pd, Pt, Ag, Au, Zn, Cd, B, Al, Ga, In, Si, Ge, Sn, P, As, Sb, Bi, S, Se, Te, Po, et une combinaison de ceux-ci.

4. Electrode négative selon l'une quelconque des revendications 1 à 3, dans laquelle le matériau actif est le Si.

5. Electrode négative selon l'une quelconque des revendications 1 à 4, dans laquelle la couche de matériau actif comprend au moins 50 % en poids du matériau actif, sur la base du poids total de la couche de matériau actif.

6. Electrode négative selon l'une quelconque des revendications 1 à 5, dans laquelle la couche de matériau actif comprend d'environ 60 % en poids à environ 70 % en poids du matériau actif, sur la base du poids total de la couche de matériau actif.

7. Electrode négative selon l'une quelconque des revendications 1 à 6, dans laquelle la couche de matériau actif comprend une solution solide du composant métallique et du matériau actif.

8. Procédé de fabrication d'une électrode négative selon l'une quelconque des revendications 1 à 7 pour une batterie au lithium rechargeable comprenant :
le mélange d'un matériau actif qui est capable de former un composé inclus dans le lithium et d'un composant métallique sélectionné dans le groupe consistant en Cu, Ti, un alliage Cu-X, un alliage Ti-X, et une combinaison de ceux-ci, pour préparer un mélange,
X étant sélectionné dans le groupe consistant en un métal alcalin, un métal alcalino-terreux, un élément du Groupe 13, un élément du Groupe 14, un élément du Groupe 15, un élément du Groupe 16, un élément de transition à l'exclusion du Cu, un élément de terre rare, et une combinaison de ceux-ci ; et X n'étant pas Ti, et
la pulvérisation thermique du mélange dans un collecteur de courant, pour produire une couche de matériau actif.

9. Procédé selon la revendication 8, dans lequel le matériau actif a une taille de particule moyenne allant d'environ 100 nm à environ 1 µm et/ou le composant métallique a une taille de particule moyenne d'environ 100 nm à environ 1 µm.

10. Procédé selon l'une quelconque des revendications 8 et 9, dans lequel le matériau actif et le composant métallique sont mélangés en un rapport de poids d'environ 30:70 à environ 70:30.

11. Procédé selon l'une quelconque des revendications 8 à 10, dans lequel la pulvérisation thermique est effectuée à une température allant d'environ 10 000°C à environ 18 000°C, et/ou dans lequel la pulvérisation thermique est effectuée à environ 100 m/s à environ 1 100 m/s.

12. Procédé selon l'une quelconque des revendications 8 à 11, dans lequel le matériau actif et le composant métallique sont mélangés sous la forme de poudre.

13. Batterie au lithium rechargeable comprenant :
l'électrode négative selon l'une quelconque des revendications 1 à 7 ;
une électrode positive ; et
un électrolyte.
